# EUROPÄISCHE PATENTSCHRIFT

(11) **EP 1 523 520 B1**
(45) Veröffentlichungstag und Bekanntmachung des Hinweises auf die Patenterteilung: **09.05.2007**
(21) Anmeldenummer: 03763696.6
(22) Anmeldetag: 03.07.2003
(51) Int. Cl.: C08K 5/529

(54) **MIT POLYMEREN PHOSPHORIGSÄUREESTERN STABILISIERTE THERMOPLASTE**
THERMOPLASTIC MATERIALS THAT ARE STABILIZED WITH POLYMER PHOSPHITE ESTERS
THERMOPLASTIQUES STABILISES PAR DES ESTERS D'ACIDE PHOSPHOREUX POLYMERES

(30) Priorität: 11.07.2002 DE 10231334
(43) Veröffentlichungstag der Anmeldung: 20.04.2005
(73) Patentinhaber: LANXESS Deutschland GmbH, 51369 Leverkusen (DE)
(72) Erfinder: BRAIG, Thomas, 40476 Düsseldorf (DE); BIELEFELDT, Dietmar, 40883 Ratingen (DE); DORSCH, Urs-Peter, 41540 Dormagen (DE); IDEL, Karsten-Josef, 47802 Krefeld (DE); KÖNIG, Annett, 51371 Leverkusen (DE); RODEFELD, Lars, 51375 Leverkusen (DE); SCHULTZ, Claus-Ludolf, 47802 Krefeld (DE)
(86) Internationale Anmeldenummer: PCT/EP2003/007094
(87) Internationale Veröffentlichungsnummer: WO 2004/007607

(56) Entgegenhaltungen:
- EP-A- 0 776 934
- WO-A-02/34833
- DE-A- 2 615 341
- DE-A- 4 244 028

## Beschreibung

Die Erfindung betrifft Zusammensetzungen auf Basis von Thermoplasten, die polymere Phosphorigsäureester enthalten.

Zu Polycarbonat- und Polyesterformmassen werden Phosphorigsäureester zur Stabilisierung bei thermischer Belastung, insbesondere zur Verhinderung von Verfärbungseigenschaften bei der Herstellung der Formmassen durch Compoundierung und Verarbeitung der Formmassen zu thermoplastischen Formkörpern zugesetzt (z.B. DE-A 2 140 207, DE-A 2 255 639, DE-A 2 615 341).

Phosphorigsäureester werden insbesondere Polyalkylenterephthalaten, die thermischen und/oder oxidativen Belastungen oder starker UV-Bestrahlung ausgesetzt sind, zur Stabilisierung zugesetzt. Die Stabilisierung reduziert den Polymerabbau bei Temperung an heißer Luft, wodurch für die praktische Anwendung wesentliche Eigenschaften wie z.B. Zähigkeit und Dehnungsfähigkeit, auf ein weniger niedriges Niveau abfallen als bei unstabilisierte Formmassen (DE-A 2 615 341).

Phosphorigsäureester werden ebenfalls Polymerblends aus Polyalkylenterephthalat und Polycarbonat, die eine gute Zähigkeit sowie Wärmeformbeständigkeit aufweisen, zugesetzt, um eine bessere Lackierbarkeit und Lackhaftung zu ermöglichen (EP-A 0 373 465).

Neben der Stabilisierung von Polymerblends bei thermischer Belastung ist eine Stabilisierung gegen Hydrolyse wünschenswert. Hierzu eignen sich Phosphorigsäureester ebenfalls, wie in DE-A 10 052 805 beschrieben.

Aus EP 0 776 934 A 1 sind thermoplastische Formmassen bekannt, die A) Polymere, ausgewählt aus der Gruppe der Polyolefine, Styrolpolymerisate, Polyamide, Polyalkylmethacrylate, Polyphenylensulfide, ABS-Pfropfpolymerisate, thermoplastische Polyurethane, B) Ester der phosphorigen Säure, welche pro Molekül mindestens eine Oxetangruppe sowie mindestens einen Rest eines zwei- oder mehrwertigen Phenols enthalten und gegebenenfalls C) Füll- und Verstärkungsstoffe, D) Flammschutzadditive, E) Elastomermodifikatoren enthalten.

Typische Anwendung für Formmassen auf Basis von Polybutylenterephthalat sind beispielsweise Formteile in der Elektronik-, Elektro-, Haushaltswaren-, Kfz-, Medizintechnik- und Telekommunikationsindustrie, für die Polybutylenterephthalat beispielsweise in unverstärkter, glasfaserverstärkter, flammgeschützter und/oder elastomermodifizierter Form und/oder in Blends mit anderen Thermoplasten eingesetzt wird. Für diese Anwendungen werden hohe Beständigkeiten bei Langzeittemperaturbelastungen und Hydrolyseeiafluss gefordert.

Es wurde nun überraschend gefunden, dass polymere Phosphorigsäureester Thermoplaste deutlich besser gegen Thermoalterung und Hydrolysealterung stabilisieren und deutlich besseres Kontakkorrosionsverhalten zeigen als niedermolekulare, monomere Phosphorigsäureester.

Gegenstand der Erfindung sind Zusammensetzungen enthaltend
A) 0,01 bis 5 Gew.-%, vorzugsweise 0,02 bis 1 Gew.-%, besonders bevorzugt 0,03 Gew.-% bis 0,1 Gew.-% (bezogen auf die Gesamtzusammensetzung) polymere Phosphorigsäureester, welche pro Molekül mindestens eine Oxetangruppe enthalten und von denen 50 % oder mehr aller Moleküle mindestens vier Monomere aus der Gruppe eines zwei- oder mehrwertigen Phenols und/oder Ester der phosphorigen Säure enthalten,
B) 20 bis 99,99 Gew.-%, vorzugsweise 30 bis 61,93 Gew.-%, besonders bevorzugt 40 bis 41,87 Gewichtsteile Thermoplaste, ausgewählt aus der Gruppe der Polycarbonate, Polyalkylenterephthalate, ABS, Styrolpolymere, Polyurethane, Polyamide, Polyolefine, bevorzugt aus der Gruppe der Polycarbonate und Polyalkylenterephatalate, insbesondere bevorzugt Polybutylenterephthalat und Polyethylenterephatalat, und
C) 0 bis 70 Gew.-%, vorzugsweise 5 bis 40 Gew.-%, besonders bevorzugt 9 bis 31 Gew.-% mindestens eines Füll- und Verstärkungsstoffen,
D) 0 bis 30 Gew.-%, vorzugsweise 5 bis 25 Gew.-%, besonders bevorzugt 9 bis 19 Gew.-% mindestens eines Flammschutzadditiven,
E) 0 bis 80 Gew.-%, vorzugsweise 21 bis 56 Gew.-%, besonders bevorzugt 31 bis 51 Gew.-% mindestens eines weiteren von Komponente B verschiedenen Thermoplasten, bevorzugt Polycarbonat.
F) 0 bis 80 Gew.-%, besonders bevorzugt 7 bis 19 Gew.-%, am meisten bevorzugt 9 bis 15 Gew.-% mindestens eines Elastomermodifikators
G) 0 bis 10 Gew.-%, bevorzugt 0,05 bis 3 Gew.-%, besonders bevorzugt 0,1 bis 0,9 Gew.-% weiterer üblicher Additive, dadurch gekennzeichnet, dass als Thermoplaste B) Polycarbonat und/oder Polyalkylenterephtahlate eingesetzt werden.

### Komponente A

Polymere Phosphorigsäureester im Sinne der Erfindung sind polymere Ester der Phosphorigsäure, die nachfolgend auch als Komponente A bezeichnet werden, pro Molekül mindestens eine Oxetangruppe enthalten und von denen 50 % oder mehr aller Moleküle mindestens vier Monomere aus der Gruppe eines zwei- oder mehrwertigen Phenols und/oder Ester der phosphorigen Säure enthalten. Bevorzugt sind Phosphorigsäureester der idealisierten Formel (Ia), (Ib) (Ic), (Id) und/oder (Id), 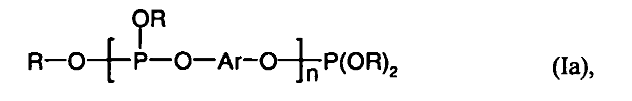 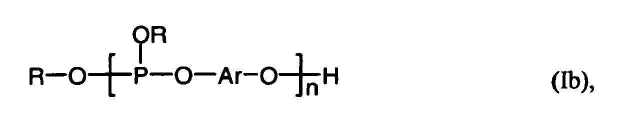 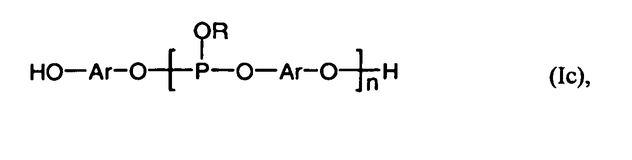 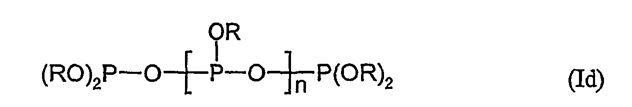 in welcher
- n: 2 oder eine beliebige ganze Zahl >2, vorzugsweise 2 bis 10,
- R: Alkyl, Aralkyl, Cycloalkyl, Aryl bzw. Phenyl oder Hetaryl bedeutet, wobei mindestens einer der Reste R den Rest eines mindestens eine Oxetangruppe Y enthaltenden Monoalkohols darstellt, und
- Ar: für Aryl steht, welches gegebenenfalls durch Alkyl und/oder Hydroxy substituiert sein kann, und wobei 0 Ar gleich oder verschieden sein kann.

Bevorzugt sind Strukturen 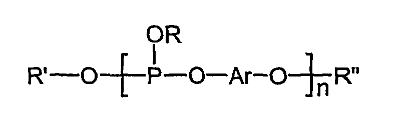 mit R' = R, HO-AR-, (RO)₂P-
und R" = (RO)₂P-, H,
wobei R und n die in Formel (Ia) bis (Id) definierte Bedeutung besitzen.

Besonders bevorzugt sind für A Strukturen, die folgendes Strukturelement enthalten 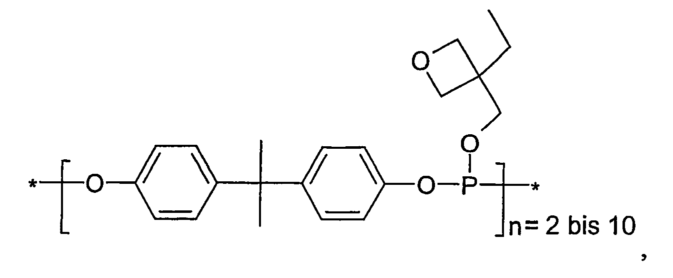 wobei
- *: den weiteren Verlauf der allgemeinen Struktur gemäß einer der Formeln (Ia), (Ib) oder (Ic), (Id) bezeichnet.

Neben den in den Formeln (Ia), (Ib) und/oder (Ic) gezeigten idealisierten Struktur kann in den erfindungsgemäßen polymeren Phosphorigsäureestem ausdrücklich auch das Strukturelement (II) 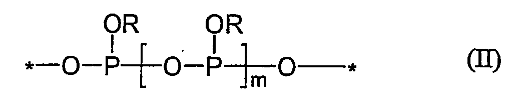 enthalten sein, wobei
- m: 0 oder eine beliebige ganze Zahl >0, vorzugsweise 0 bis 10 sein kann, und
- *: den weiteren Verlauf der allgemeinen Struktur gemäß einer der Formeln (Ia), (Ib) oder (Ic), (Id) bezeichnet.

Ausdrücklich können auch verzweigende Strukturelemente in den erfindungsgemäßen Polyphosphorigsäureestern enthalten sein, wie beispielsweise sie in den Formeln (IIIa), (IIIb) und (IIIc)

*-O-P-[-O-Ar-O-*]₂ (IIIa),

*-O-P-[-O-P-O-*]₂ (IIIb),

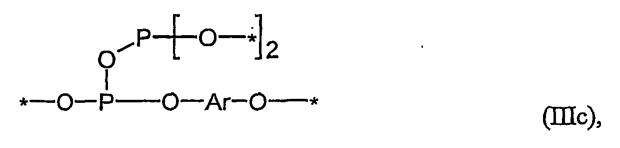

gezeigt werden, wobei
- *: den weiteren Verlauf der allgemeinen Struktur gemäß einer der Formeln (Ia), (Ib) oder (Ic), (Id) bezeichnet.

Als Reste R in Formel (Ia), (Ib). (Ic), (Id), (II) sind beispielsweise geeignet: H, C₁-C ₁₈-Alkyl, ein- bzw. mehrkerniges C₃-C₁₀-Cycloalkyl, Phenyl-C₁-C₂-alkyl, ein- bzw. mehrkerniges C₆-C₁₈-Aryl, wie Phenyl, Naphthyl, Anthracyl, Phenanthryl, Biphenyl, Phenoxyphenyl oder Fluorenyl sowie Heterozyklen wie beispielsweise Tetrahydrofuryl, wobei die Arylreste beispielsweise durch Alkyl und/oder Halogen, wie C₁-C₁₈-Alkyl, Chlor und/oder Brom substituiert sein können.

Der Rest R kann bevorzugt auch ein Derivat eines oder mehrerer Oxetangruppen P enthaltender C₁-C₆-Monoalkohol sein.

Als Oxetangruppe Y sei der heterocyclische Rest 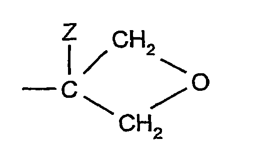 verstanden, worin Z -CH₂-O-C₆H₁₃ oder CH₂-O-C₂H₅, oder bevorzugt H, n-C₅H₁₁, -CH₂-C₅H₁₁, oder sehr bevorzugt CH₃ oder äußerst bevorzugt C₂H₅ sein kann.

Der Rest R in den Formeln (Ia), (Ib). (Ic), (Id), (II) kann besonders bevorzugt auch selbst die Oxetangruppe Y, beispielsweise mit Z = H, CH₃, C₂H₅, insbesondere bevorzugt mit Z = CH₃, C₂H₅ bedeuten.

Die erfindungsgemäßen polymeren Phosphorigsäureester besitzen pro Molekül mindestens eine Oxetangruppe Y. Bevorzugt beträgt das molare Verhältnis von Phosphor P : Oxetangruppe Y in den erfindungsgemäßen polymeren Phosphorigsäure estern 5:1 oder weniger, im besonders bevorzugten Fall 3:1 oder weniger, am meisten bevorzugt bevorzugter 2: 1 oder weniger.

Der Rest Ar leitet sich von Phenolen mit 2 phenolischen Hydroxylgruppen ab. Vorzugsweise leitet sich der Rest Ar von den folgenden Verbindungen ab: Hydrochinon, Resorcin, Brenzcatechin, Di-t-butylbrenzcatechin, 4,4'-Dihydroxydiphenyl, Bis-(hydroxy-phenyl)-alkane wie beispielsweise C₁-C₈-Alkylen- bzw. C₂-C₈-Alkylidenbisphenole, Bis-(hydroxyphenyl)-cycloalkane wie beispielsweise C₅-C₁₅-Cycloalkylen- bzw. C₅-C₁₅-Cycloalkylenbisphenole, α,α'-Bis-(hydroxyphenyl)-diisopropylbenzol sowie die entsprechenden kernalkylierten bzw. kernhalogenierten Verbindungen, beispielsweise Bis-(4-hydroxy-phenyl)-propan-2,2 (Bisphenol A), Bis-(4-hydroxy-3,5-dichlorphenyl)-propan-2,2 (Tetrachlorbisphenyl A), Bis-(4-hydroxy-3,5-dibromohenyl)-propan-2,2 (Tetrabrombisphenol A), Bis-(4-hydroxy-3,5-dimethyl-phenyl)-propan-2,2 (Tetramethylbisphenol A), Bis-(4-hydroxy-3-methyl-phenyl-propan-2,2-cyclohexan-1,1 (Bisphenol Z) sowie α,α'-Bis-(4-hydroxyphenyl)-p-diisopropyl-benzol, Dihydroxynaphthaline und Dihydroxyanthracene.

Als Phenole mit mehr als zwei phenolischen Hydroxylgruppen eignen sich beispielsweise Phloroglucin, Pyrogallol.

Unter den beanspruchten Verbindungen werden die sich von 2,2-Bis-(hydroxyphenyl)-alkanen und oxetangruppenhaltigen Monoalkoholen ableitenden Verbindungen der Formeln (Ia), (Ib). (Ic), (Id), (II), (IIIa), (IIIb), (IIIc) bevorzugt, also Verbindungen der Formel (Ia), (Ib). (Ic), (Id), (II), (IIIa), (IIIb), (IIIc), worin Ar einem Rest der Formel (IV) entspricht 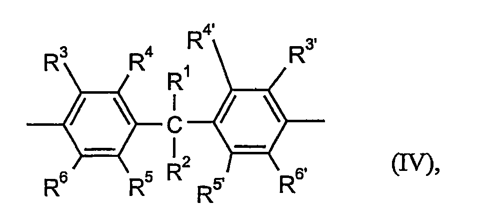 worin
- R¹ und R²: gleich oder verschieden sind und H, C₁-C₁₈-Alkyl, ein- oder mehrkerniges C₃-C₆-Cycloalkyl oder ein- oder mehrkerniges C₆-C₁₈-Aryl, bevorzugt C₁-C₁₈-Alkyl, besonders bevorzugt Methyl bedeuten,
- R³, R^{3'}, R⁴, R^{4'}, R⁵, R^{5'}, R⁶ und R^{6'}: gleich oder verschieden sind und H, C₁-C₁₈-Alkyl, ein- oder mehrkerniges C₃-C₆-Cycloalkyl, ein- oder mehrkerniges C₆-C₁₈-Aryl, C₁-C₁₈-Alkoxy, C₁-C₁₈-Aryloxy oder Halogen, besonders bevorzugt H oder C₁-C₁₈-Alkyl bedeuten.

Die als Substitutent für Verbindungen der Formel (IV) geeigneten Alkylsubstüuenten können unverzweigt oder verzweigt, gesättigt oder ungesättigt sein, geeignete Arylsubstituenten können beispielsweise Phenyl oder Biphenyl sein, als Halogensubstituenten kommen bevorzugt Cl oder Br vor.

Die Verbindungen der Formeln (Ia), (Ib). (Ic), (Id), (II), (IIIa), (IIIb), (IIIc), in denen Ar einem Rest der Formel (IV) entspricht, werden durch Umsetzung der entsprechenden Bisphenole der Formel (V) 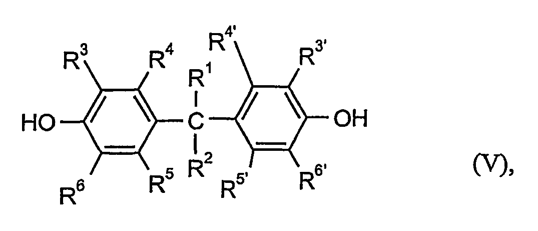 worin

R¹ bis R⁶ sowie R^{3'} bis R^{6'}, die die obengenannte Bedeutung haben, in der in DE-OS 2 255 639 beschriebenen Weise erhalten.

Die Verbindungen der beanspruchten Art stellen hochsiedende Flüssigkeiten, Harze oder Feststoffe dar. Sie sind in organischen Lösungsmitteln gut löslich, insbesondere in den bei der Herstellung von Polycarbonaten verwendeten Lösungsmitteln und eignen sich deshalb besonders zur Verwendung als Stabilisatoren in Polycarbonaten hoher Viskosität, welche bei hohen Temperaturen hergestellt bzw. verarbeitet werden.

Die Verbindungen, von denen nachstehend einige Beispiele aufgeführt sind, können einzeln als auch in Mischung hergestellt und angewendet werden. Die Phosphite können einen linearen oder verzweigten Aufbau besitzen. Es können auch Strukturelemente unterschiedlicher Beispiele zu neuen Strukturbeispielen zusammengefügt werden.

Eine beispielhafte Auswahl gibt die folgende Übersicht:

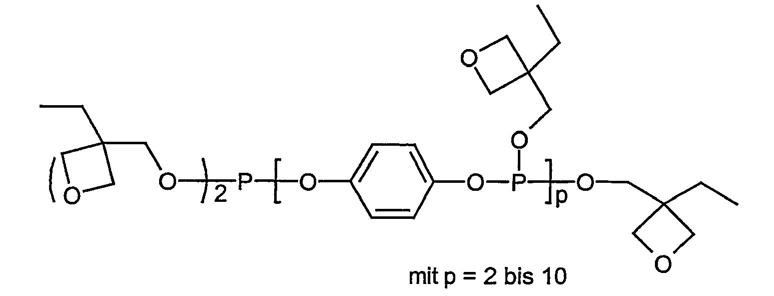

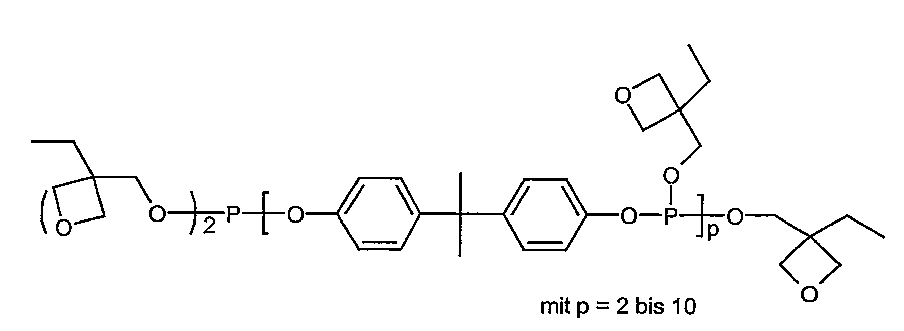

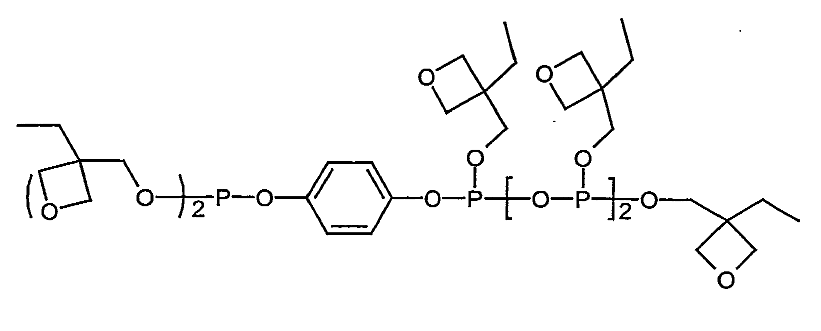

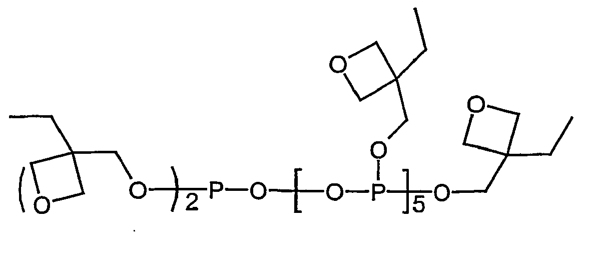

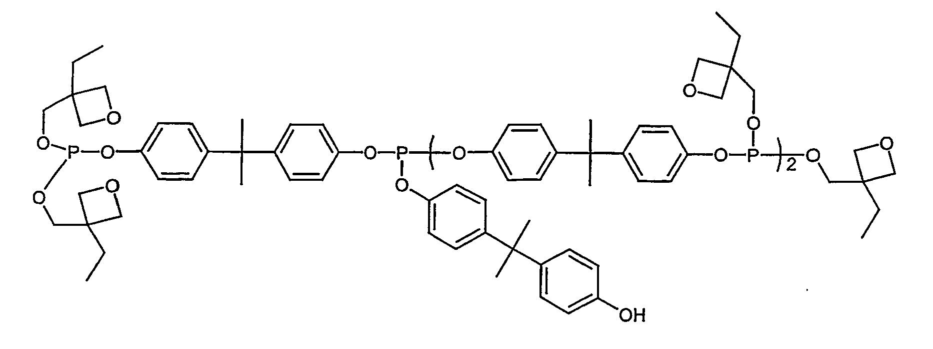

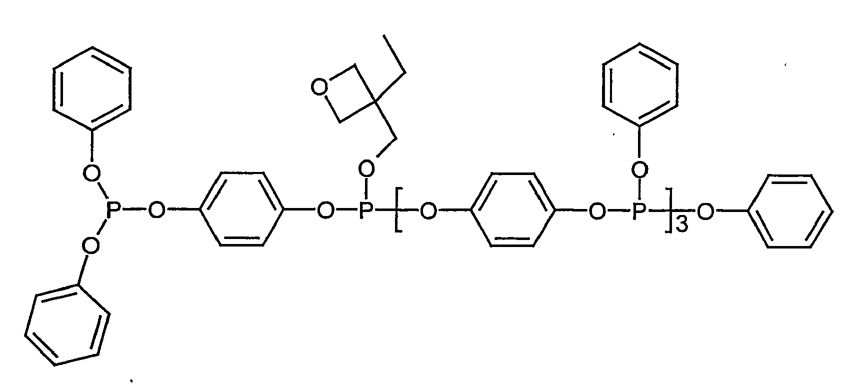

Die Herstellung niedermolekularer Phosphorigsäureester der beispielsweise der Formel (Ia), (Ib), (Ic), (Id) mit n=1 mit mindestens einem Oxetangruppenrest sind bekannt in der DE-A 22 55 639 (= US-A 4 073 769 und 4 323 501) beschriebenen Verfahren herstellen.

Die Herstellung der erfindungsgemäßen Phosphite der Formeln (Ia), (Ib). (Ic), (Id), (II), (IIIa), (IIIb), (IIIc), in denen R der Rest eines oxetangruppenhaltigen Monoalkohols ist, kann beispielsweise erfolgen, indem ein Gemisch, bestehend aus einem oxetangruppenhaltigen Monoalkohol R-OH und einer zwei oder mehrere phenolischen Hydroxylgruppen enthaltenden Arylverbindung, beispielsweise einem Bisphenol der Formel (V), in Gegenwart eines alkalischen Katalysators mit Triphenylphosphit umgesetzt wird, wobei sich das gewünschte Produkt unter Abspaltung von Phenol bildet. Als Reaktionstemperatur seien 100°- bis 240°C, bevorzugt 100 bis 210, sehr bevorzugt 100-180°C, als Katalysatoren seien NaOH, NaOCH₃, Na-phenolat, Na₂CO₃, KOH und Tributylamin genannt. Bei der Herstellung polymerer Phosphorigsäureester der Formel (Id) entfällt die Zugabe der zwei oder mehrere phenolische Hydroxylgruppen enthaltende Arylverbindungen.

Die Reaktion kann in Substanz oder unter Zusatz von Lösungsmitteln erfolgen. Das Molverhältnis der Reaktanten oxetangruppenhaltiger Monoalkohol R-OH, Arylverbindung und Triphenylphosphit, ergibt sich aus der mittleren molekularen Zusammensetzung des herzustellenden polymeren Endprodukts der Formel (Ia), (Ib) (Ic) oder (Id).

Die erfindungsgemäßen Polyphosphorigsäureester bestehen zu mindestens 50 % aus Polymeren bzw. Molekülen mit 4 oder mehr Monomereinheiten, wobei als Monomereinheit erfindungsgemäß die Strukturelemente -P= und -Ar- der Formeln (Ia-d) betrachtet werden. Erfindungsgemäß weisen in mindestens die Hälfte der polymeren Phosphorigsäureester der Formeln (Ia-d) mindestens eine Molmasse eines Tetrameren mit n=4 oder mehr auf, wobei als Berechnungsgrundlage die mittleren Molmassen der eingesetzten -P(OR)O- Einheiten (Formeln Ia-d) und eingesetzten -Ar-O-Einheiten (Formeln Ia-c) herangezogen wird. Erfindungsgemäß wird als Grundlage zur Ermittlung der Molmassenverteilung beispielsweise das Integral der Produktsignale durch Einsatz eines Brechungsindex (Refractive Index- oder RI-) Detektors über das Elutionsvolumen bei der Gel Permeations Chromatographie (GPC) herangezogen, bei der Tetrahydrofuran als Eluent eingesetzt und gegen Polystyrol-standards kalibriert wird. Im bevorzugten Fall wird die Gel Permeationschromatographie nach DIN 55672-1 durchgeführt.

Erfindungsgemäß können auch Mischungen verschiedener erfindungsgemäßer Polyphoshorigsäureester den Thermoplasten der Komponente B) zugefügt werden.

Die Zugabe der erfindungsgemäßen Polyphoshorigsäureester der Komponente A) zu den Thermoplasten der Komponente B) kann erfolgen, indem Komponente A entweder in reiner Form dem geschmolzenen Thermoplast der Komponente B) oder gegebenenfalls in Lösung in einem niedrigsiedenden Lösungsmittel dem Thermoplast der Komponente B) zudosiert wird. Auch durch Tränkung des gepulverten oder granulierten Thermoplast der Komponente B) mit Komponente A) (gegebenenfalls mit dessen Lösung in einem Lösungsmittel wie zum Beispiel Isopropanol) in einer geeigneten Mischapparatur kann Komponente A) zudosiert werden.

In einer bevorzugten Ausführungsform kann Komponente A) auch als hochkonzentrierter Batch in einem Thermoplasten dem Thermoplasten der Komponente B) während des Herstellungs-/Compoundierprozesses zugegeben werden. Der Batch der Komponente A) wird beispielsweise durch Compoundierung der Komponente A) in einen Thermoplasten hergestellt. Die Konzentration der Komponente A) in dem Batch beträgt dabei mehr als 3 Gew.-%, bevorzugt mehr als 5 Gew.-%, besonders bevorzugt mehr als 8 Gew.-%. Bevorzugt wird als Thermoplast zur Batchherstellung dergleiche Thermoplaste wie bei Komponente B) eingesetzt. In einer besonders bevorzugten Ausführungsform wird Polyalkylenterephthalat oder Polycarbonat, insbesondere bevorzugt Polybutylenterephthalat oder Polycarbonat als Thermoplast für die Batchherstellung eingesetzt, wenn als Komponente B) ein Polyalkylenterephthalat oder Polycarbonat eingesetzt wird. Das Batch kann granulatfömig oder pulverförmig sein. Die Aufarbeitung/Verarbeitung des Batches erfolgt nach bekannten Techniken.

Entsprechendes gilt für die Zudosierung des Phosphits während der Herstellung des Polymers nach bekannten Verfahren in die Schmelze bzw. in einem Lösungsmittel.

Phosphorigsäureester im Sinne der Erfindung sind ebenfalls Ester der phosphorigen Säure, welche pro Molekül mindestens eine phosphorgebundene Hydroxylgruppe (P-OH) sowie mindestens einen Rest eines zwei- oder mehrwertigen Phenols enthalten.

### Komponente B

Als **Komponente B** enthalten die Zusammensetzungen erfindungsgemäß mindestens einen Thermoplasten aus der Gruppe der Polycarbonate und Polyalkylenterephthalate, z.B. Polybutylenterephthalat oder Polyethylenterephthalat. Erfindungsgemäß können bevorzugt auch Mischungen aus zwei oder mehreren Thermoplasten als Komponente B eingesetzt werden. Besonders bevorzugt sind Mischungen die Polycarbonat und Polyalkylenterephathalat umfassen, wie beispielsweise Mischungen aus Polycarbonat und Polybutylenterephthalat oder Polycarbonat und Polyethylenterephthalat.

Bevorzugt können als Komponente B teilaromatische Polyester eingesetzt werden. Der erfindungsgemäßen teilaromatische Polyester sind ausgewählt aus der Gruppe Derivate der Polyalkylenterephthalate, bevorzugt ausgewählt aus der Gruppe der Polyethylentherephthalate, der Polytrimethylenterephthalate und der Polybutylenterephthalate, besonders bevorzugt der Polybutylenterephthalat, ganz besonders bevorzugt des Polybutylenterephthalats.

Unter teilaromatischen Polyestern versteht man Materialien, die neben aromatischen Molekülteilen auch aliphatische Molekülteile enthalten

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973)..

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetrameihylcyclobutan, 2,2-bis-(3-β-hydroxyethoxyphenyl)-propan und 2,2-bis-(4-hydroxypropoxyphenyl)-propan (DE-OS 24 07 674, 24 07 776, 2715 932).

Die Polyalkylenterephthalate können durch Einbau relativ kleiner Mengen 3- oder 4-wertiger Alkohole oder 3- oder 4-basischer Carbonsäure, wie sie z.B. in der DE-OS 19 00 270 und der US-PS 3 692 744 beschrieben sind, verzweigt werden.

Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,4 bis 1,5 cm³/g, vorzugsweise 0,5 bis 1,3 cm³/g, jeweils gemessen in Phenol/o-Dichlorbenzol (1:1 Gew.-%) bei 25°C.

Bevorzugt können die erfindungsgemäß hergestellten Polyester auch im Gemisch mit anderen Polyestern und/oder weiteren Polymeren eingesetzt werden. Besonders bevorzugt werden Gemische von Polyalkylenterephthalaten mit anderen Polyestern, ganz besonders bevorzugt Gemische von Polybutylenterephthalat mit Polyethylenterephthalat eingesetzt.

Den Polyestern können übliche Additive wie z.B. Entformungsmittel, Stabilisatoren und/oder Fließmittel in der Schmelze zugemischt oder auf der Oberfläche aufgebracht werden.

### Komponente C

Als Komponente C) enthalten die thermoplastischen Formmassen einen Füllstoff oder Verstärkungsstoff oder eine Mischung aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Insbesondere bevorzugt werden erfindungsgemäß mineralische teilchenförmige Füllstoffe auf der Basis von Talk, Wollastonit, Kaolin und/oder Glasfasern.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, besonders bevorzugt Talk, Wollastonit oder Kaolin.

Im Falle, dass Komponente F) ein Blockcopolymer ist, enthalten die Blends den mineralischen Füllstoff bevorzugt in einer Menge von 2,5 bis 34, besonders bevorzugt in einer Menge von 3,5 bis 28, am meisten bevorzugt in einer Menge von 5 bis 21 Gew.-%n.

Besonders bevorzugt sind auch nadelförmige mineralische Füllstoffe. Unter nadelförmigen mineralischen Füllstoffen wird erfindungsgemäß ein mineralischer Füllstoff mit stark ausgeprägtem nadelförmigen Charakter verstanden. Als Beispiel seien nadelförmigere Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, am meisten bevorzugt bei kleiner 5 µm, bestimmt mit einem CILAS GRANULOMETER.

Besonders bevorzugt als Komponente E) werden auch mineralische Füllstoffe auf der Basis von Talk. Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, infrage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-% bezogen auf die Gesamtmasse an Füllstoff aufweisen.

Die mineralischen Füllstoffe auf Basis von Talk können auch oberflächenbehandelt sein. Sie können beispielsweise mit einem Haftvermittlersystem z.B. auf Silanbasis ausgerüstet sein.

Die erfindungsgemäßen mineralischen Füllstoffe auf Basis von Talk haben bevorzugt eine obere Teilchen- bzw. Korngröße d97 kleiner 50 µm, bevorzugt kleiner 10, besonders bevorzugt kleiner 6 und insbesondere bevorzugt kleiner 2,5 µm. Als mittlere Korngröße d50 wird bevorzugt ein Wert kleiner 10, bevorzugt kleiner 6, besonders bevorzugt kleiner 2 und insbesondere bevorzugt kleiner 1 µm gewählt. Die d97- und d50-Werte von den Füllstoffen D werden nach Sedimentationsanalyse SEDIGRAPH D 5 000 bzw. nach Siebanalyse DIN 66 165 bestimmt.

Das mittlere Aspektverhältnis (Durchmesser zu Dicke) der teilchenförmigen Füllstoffe auf Basis von Talk liegt bevorzugt im Bereich 1 bis 100, besonders bevorzugt 2 bis 25 und insbesondere bevorzugt 5 bis 25, bestimmt an elektronenmilcroskopischen Aufnahmen von Ultradünnschnitten der fertigen Produkte und Ausmessen einer repräsentativen Menge (ca. 50) von Füllstoffpartikeln.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Besonders bevorzugt sind erfindungssgemäß auch Glasfasern, die im allgemeinen einen Faserdurchmesser zwischen 7 und 18, bevorzugt zwischen 9 und 15 µm haben, können als Endlosfasern oder als geschnittene oder gemahlene Glasfasern zugesetzt werden, wobei die Fasern mit einem geeigneten Schlichtesystem und einem Haftvermittler bzw. Haftvermittlersystem z.B. auf Silanbasis ausgerüstet sein können.

Gebräuchliche Silanverbindungen zur Vorbehandlung haben beispielsweise die allgemeine Formel

(X-(CH2)q)k-Si-(O-CrH2r+1)4-k

in der die Substituenten folgende Bedeutung haben:
- x: NH2-, HO-, 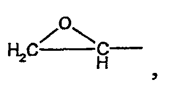
- q: eine ganze Zahl von 2 bis 10, bevorzugt 3 bis 4
- r: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis, vorzugsweise 0,5 bis 1,5 und insbesondere 0,8 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt auf

Die Teilchendurchmesser am fertigen Produkt können dabei zum Beispiel dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden.

### Komponente D

Als Flammschutzmittel können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO-A 98/17720 geeignet, z.B. Triphenylphosphat (TPP), Resorcinol-bis-(diphenylphosphat) einschließlich Oligomere (RDP) sowie Bisphenol-A-bis-diphenylphosphat einschließlich Oligomere (BDP), Melaminphosphat, Melaminpyrophosphat, Melaminpolyphosphat und deren Mischungen. Als Stickstoffverbindungen kommen insbesondere Melamin und Melamincyanurat in Frage. Als Synergisten sind z.B. Antimonverbindungen, insbesondere Antimontrioxid und Antimonpentoxid, Zinkverbindungen, Zinnverbindungen wie z.B. Zinnstannat und Borate geeignet. Kohlenstoffbildner und Tetrafluorethylenpolymerisate können zugesetzt werden.

### Komponente E

Als Komponente E können erfindungsgemäß mindestens ein weiterer, von der als Komponenten B eingesetzten Thermplasten verschiedener Thermoplasten eingesetzt werden.

Bevorzugt können als Komponente E erfindungsgemäß Polycarbonate oder eine Mischung von Polycarbonaten eingesetzt werden.

Bevorzugte Polycarbonate sind solche Homopolycarbonate und Copolycarbonate auf Basis der Bisphenole der allgemeinen Formel (I),

HO-Z-OH (I)

worin Z ein divalenter organischen Rest mit 6 bis 30 C-Atomen ist, der eine oder mehrere aromatische Gruppen enthält.

Bevorzugt sind Bisphenole der Formel (Ia) 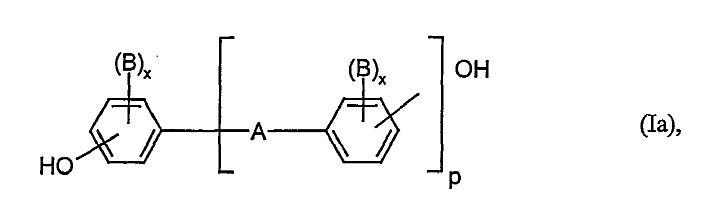 wobei
- A: eine Einfachbindung, C1-C5-Alkylen, C2-C5-Alkyliden, C5-C6-Cycloalkyliden, -O-, -SO-, -CO-, -S-, -SO2-, C6-C12-Arylen, an das weitere aromatische gegebenenfalls Heteroatome enthaltende Ringe kondensiert sein können,
oder ein Rest der Formel (II) oder (III) 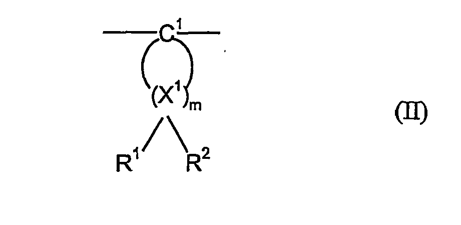 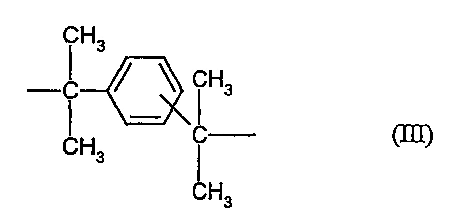
- B: jeweils C1-C12-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹ und R²: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R¹ und R² gleichzeitig Alkyl sind.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenylethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern 62039/1986, 62040/1986 und 105550/1986.

1,1-Bis-(4-hydroxyphenyl)-3,3,5-tri.methylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R Müller "Polycarbonate" in Becker, Braun, Kunststoff Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964 sowie in DE-A 1031512, in US-A 3 022 272, in US-A 5 340 905 und in US-A 5 399 659.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate haben bevorzugt ein Gewichtsmittel der molaren Masse (Mw), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxyhiphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α"-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Copolycarbonate können auch verwendet werden. Copolycarbonate im Sinne der Erfindung sind insbesondere Polydiorganosiloxan-Polycarbonat-Blockcopolymere, deren Gewichtsmittel der molaren Masse (Mw) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von α,ω-Bishydroxyaryloxyendgruppen-haltigen Polydiorganosiloxanen mit einem mittleren Polymerisationsgrad von bevorzugt Pn = 5 bis 100, besonders bevorzugt Pn = 20 bis 80, hergestellt werden.

Die Polydiorganosiloxan-Polycarbonat-Blockpolymere können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung bevorzugt 2,5 bis 25 Gew.-% beträgt.

Solche Polydiorganosiloxan-Polycarbonat-Blockcopolymere sind dadurch gekennzeichnet, dass sie in der Polymerkette einerseits aromatische Carbonatstruktur-Einheiten (1) und andererseits Aryloxyendgruppen-haltige Polydiorganosiloxane (2) enthalten, 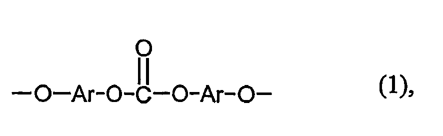 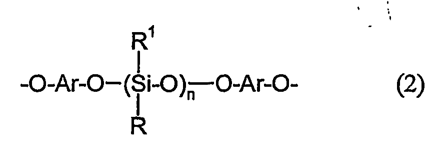 worin
- Ar: gleiche oder verschiedene difunktionelle aromatische Reste sind und
- R und R¹: gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise Methyl, bedeuten und
- n: den mittleren Polymerisationsgrad von bevorzugt 5 bis 100, besonders bevorzugt 20 bis 80, bedeutet.

Alkyl ist in vorstehender Formel (2) vorzugsweise C₁-C₂₀-Alkyl, Alkenyl ist in vorstehender Formel (2) vorzugsweise C₂-C₆-Alkenyl; Aryl ist in vorstehender Formel (2) vorzugsweise C₆-C₁₄-Aryl. Halogeniert bedeutet in vorstehender Formel teilweise oder vollständig chloriert, bromiert oder fluoriert.

Beispiele für Alkyle, Alkenyle, Aryle, halognierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere und ihre Herstellung werden zum Beispiel in US-A3 189 662, US-A 3 821 325 und US-A 3 832 419 beschrieben.

Bevorzugte Polydiorganosiloxan-Polycarbonat-Blockcopolymere können z.B. hergestellt werden, indem man α,ω-Bishydroxyaryloxyendgruppen-haltige Polydiorganosiloxane zusammen mit anderen Bisphenolen, gegebenenfalls unter Mitverwendung von Verzweigern in den üblichen Mengen, z.B. nach dem Zweiphasengrenzflächenverfahren umsetzt (wie zum Beispiel beschrieben in H. Schnell, "Chemistry and Physis of Polycarbonates", Polymer Reviews, Band 9, S. 31-76, Interscience Publishers, New York, London, Sidney, 1964). Die als Edukte für diese Synthese verwendeten α,ω-Bishydroxyaryloxyendgruppen-haltige Polydiorganosiloxane und ihre Herstellung sind zum Beispiel in US-A 3 419 634 beschrieben.

Den Polycarbonaten könne übliche Additive wie z.B. Entformungsmittel, Stabilisatoren und/oder Fließmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

Als Komponente B und E können erfindungsgemäß ausdrücklich auch Kombinationen aus verschiedenen Thermoplasten eingesetzt werden wie beispielsweise bevorzugt PC/Polyalkylenterephthalat, PC/PBT, PC/PET, PC/ABS. Besonders bevorzugt sind die Mischungen aus PC/Polyalkylenterephthalat wie PC/PBT und PC/PET bei denen das Gewichts-Verhältnis PC : Polyalkylenterephthalat im Bereich 3:1 bis 1:3 liegt.

### Komponente F

Die Komponente F umfasst ein oder mehrere Pfropfpolymerisate von
- F.1: 5 bis 95, vorzugsweise 30 bis 90 Gew.-%, wenigstens eines Vinylmonomeren auf
- F.2: 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage F.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere F.1 sind vorzugsweise Gemische aus
- F.1.1: 50 bis 99 Gew.-%n Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
- F.1.2: 1 bis 50 Gew.-%n Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere F.1.1 sind ausgewählt aus mindestens einem der Monomere Styrol, α-Methylstyrol und Methylmethacrylat, bevorzugte Monomere F.1.2 sind ausgewählt aus mindestens einem der Monomere Acrylnitril, Maleinsäureanhydrid und Methylmethacrylat.

Besonders bevorzugte Monomere sind F.1.1 Styrol und F.1.2 Acrylnitril.

Für die Pfropfpolymerisate F geeignete Pfropfgrundlagen F.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen F.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß F.1.1 und F.1.2), mit der Maßgabe, dass die Glasübergangstemperatur der Komponente F.2 unterhalb <10°C, vorzugsweise <0°C, besonders bevorzugt <-10°C liegt.

Besonders bevorzugt ist reiner Polybutadienkautschuk.

Besonders bevorzugte Polymerisate F sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage F.2 beträgt mindestens 30 Gew.-%, vorzugsweise mindestens 40 Gew.-% (in Toluol gemessen).

Die Pfropfcopolymerisate F werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß F.2 der Polymerisate F sind vorzugsweise Polymerisate aus Acrylsäurealkylestern, gegebenenfalls mit bis zu 40 Gew.-%, bezogen auf F.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage F.2.

Bei cyclischen vernetzenden Monomeren mit mindestens 3 ethylenisch ungesättigten Gruppen ist es vorteilhaft, die Menge auf unter 1 Gew.-% der Pfropfgrundlage F.2 zu beschränken.

Bevorzugte "andere" polymerisierbare, ethylenisch ungesättigte Monomere, die neben den Acrylsäureestern gegebenenfalls zur Herstellung der Pfropfgrundlage F.2 dienen können, sind z. B. Acrylnitril, Styrol, α-Methylstyrol, Acrylamide, Vinyl-C₁-C₆-akylether, Methylmethacrylat, Butadien. Bevorzugte Acrylatkautschuke als Pfropfgrundlage F.2 sind Emulsionspolymerisate, die einen Gelgehalt von mindestens 60 Gew.-% aufweisen.

Weitere geeignete Pfropgrundlagen gemäß F.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage F.2 wird bei 25°C in einem geeigneten Lösungsmittel bestimmt (M. Hoffmann, H. Krömer, R Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente G

Die Komponente G stellen Additive dar. Übliche Additive sind z.B. Stabilisatoren (zum Beispiel UV-Stabihsatoren, Thermostabilisatoren, Gammastrahlenstabilisatoren), Antistatika, Fließhilfsmittel, Entformungsmittel, Brandschutzadditive, Emulgatoren, Nukleirungsmittel, Weichmacher, Gleitmittel, Farbstoffe und Pigmente. Die genannten und weitere geeignete Additive sind zum Beispiel beschrieben in Gächter, Müller, Kunststoff-Additive, 3. Ausgabe, Hanser-Verlag, München, Wien, 1989. Die Additive können alleine oder in Mischung bzw. in Form von Masterbatchen eingesetzt werden.

Als Stabilisatoren können zum Beispiel sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Pigmente können z.B. Titandioxid, Ultramarinblau, Eisenoxid, Ruß, Phthalocyanine, Chinacridone, Perylene, Nigrosin und Anthrachinone eingesetzt werden.

Als Nukleierungsmittel können z.B. Natriumphenylphosphinat, Aluminiumoxid, Siliziumdioxid sowie bevorzugt Talkum eingesetzt werden.

Als Gleit- und Entformungsmittel können Esterwachse, Penteritrytstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Die Herstellung der erfindungsgemäßen Zusammensetzungen erfolgt nach an sich bekannten Verfahren durch Mischen der Komponenten. Das Mischen der Komponenten erfolgt durch Vermischen der Komponenten in den entsprechenden Gewichtsanteilen. Vorzugsweise geschieht das Mischen der Komponenten bei Raumtemperatur (bevorzugt 0 bis 40°C) und/oder bei Temperaturen von 220 bis 330°C durch gemeinsames Vermengen, Vermischen, Kneten, Extrudieren oder Verwalzen der Komponenten. Es kann vorteilhaft sein, einzelne Komponenten vorzumischen. Es kann weiterhin vorteilhaft sein, Formteile oder Halbzeuge aus einer bei Raumtemperatur (bevorzugt 0 bis 40°C) hergestellten physikalischen Mischung (Dryblend) vorgemischter Komponenten und/oder einzelner Komponenten direkt herzustellen.

Gegenstand der Erfindung sind ferner Verfahren zur Herstellung der Zusammensetzungen, deren Verwendung und zur Herstellung von Formkörpern sowie die Formkörper selbst.

Die erfindungsgemäßen polymeren Phosphorigsäureester zeichnen sich durch sehr gute Stabilisierungseigenschaften für Thermoplaten, bevorzugt von Polycarbonat, Polyester und/oder Polyalkylenterephthalat enthaltende Formmassen im Vergleich zu niedermolekularen Phosphorigsäureester aus, insbesondere hinsichtlich Thermo- und Hydrolysestabilisierung aus. Ferner ist das Kontaktkorrosionsverhalten bei Zusammensetzungen, die erfindungsgemäße polymere Phosphorigsäureester enthalten, deutlich besser im Vergleich zu niedermolekularen Phosphorigsäureestem

### Beispiele:

### Komponente A1: Polymerer Polyphoshosphorigsäureester

Unter Stickstoffatmosphäre werden 456 g Triphenylphosphit, 375 g 3-Ethyl-3-hydroxymethyloxetan, 225 g Bisphenol A und 2,5 g Natriumphenolat bei 40°C vorgelegt. Anschließend wird auf 100 mbar evakuiert. Innerhalb von einer Stunde wird auf 115°C aufgeheizt und eine halbe Stunde nachgerührt. Dann wird bei 10 mbar eine halbe Stunde am Rückfluss gekocht und anschließend bis zu einer maximalen Sumpftemperatur von 170°C bei 1 mbar destilliert. Nach Zugabe von 1,5 g 75%iger Phosphorsäure wird bis 190°C geheizt. Nach Abkühlen stellte der Sumpf eine bei Raumtemperatur hochviskose farblose Masse dar und wurde als Komponente A1 eingesetzt. Das Produkt hat in der GPC Gewichtsmittel Mw=1150 g/mol und ein Zahlenmittel Mn=656 g/mol. Die Molmasse für ein Strukturelement das gemäß Formeln (Ia-c) vier Monomereinheiten, davon zwei Bisphenol A-Monomere und zwei Phosphorigsäureester-Monomere mit der Struktur 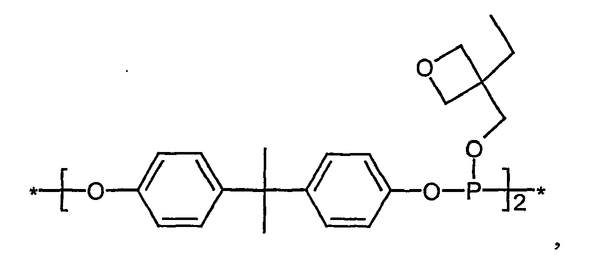 beinhaltet wurde zu 744 g/mol berechnet. Durch Integration der Produktsignale über das Eluationsvolumen bei der Gel Permeations Chromatographie (GPC) wurde ein Masseanteil von 52 % mit einem Molekulargewicht von 800g/mol und mehr bestimmt, so dass mindestens 50 Gew.-% des Reaktionsproduktes aus mindestens vier Monomeren bestehen.

Komponente A1 wurde nach Erwärmen auf 60°C mit PBT-Pulver der Komponente B vermischt und so für die Compoundierung eingesetzt. In Tabelle 1 ist der tatsächliche Gehalt an Polyphosphorigsäureester bezogen auf die Gesamtzusammensetzung angegeben.

**Stabilisator S1:** Als Vergleich der niedermolekulare Phosphorigsäureester Phosphorigsäure-(1-methethyliden)di-4,1-phenylen-tetrakis(3-ethyl-(3-oxetanyl)methyl)-ester CA:53184-75-1) eingesetzt. Der Phosphorigsäureester wurde als Masterbatch (10%ig) in Polybutylenterephthalat (PBT) der Komponente B) der Bayer AG, Leverkusen, Deutschland, mit einer intrinsischen Viskosität IV = 0,95 cm³/g eingesetzt. In Tabelle 1 ist der tatsächliche Gehalt an Phosphorigsäureester bezogen auf die Gesamtzusammensetzung angegeben (analog Beispiel 1 aus DE-A 22 55 639).

**Stabilisator S2:** Als Vergleich wurde der nicht oxetaniunktionalisierter Phosphorigsäureester Tetrakis(2,4-di-tert.-butylphenyl)(1,1-biphenyl)4,4'-diylbiphosphonit), der unter dem Namen IRGAFOS PEPQ-FF bei der Ciba Geigy GmbH, Frankfurt, erhältlich ist, eingesetzt.

**Komponente B:** Lineares Polybutylenterephthalat (Pocan B 1300, Handelsprodukt der Bayer AG, Leverkusen, Deutschland) mit einer Intrinsischen Viskosität von ca. 0,93 cm³/g (gemessen in Phenol : 1,2-Dichlorbenzol =1:1 bei 25°C)

**Komponente C:** Mit silanhaltigen Verbindungen beschlichtete Glasfaser mit einem Durchmesser von 10 µm (CS 7967, Handelprodukt der Bayer Antwerpen N.V., Antwerpen, Belgien)

Als Additive wurden übliche Nukleierungsmittel und Entformungsmittel verwendet.

Compoundierungen der Beispiele in den Tabellen 1 und 2 erfolgten auf einem Zweiwellenextruder des Typs ZSK32 (Werner und Pfleiderer) bei Massetemperaturen von 260 bis 290°C.

Die Prüfkörper wurden auf einer Spritzgießmachine des Typs Arburg 320-210-500 bei einer Massetemperatur von ca. 260°C und einer Werkzeugtemperatur von ca. 80°C zu Schulterstäben (3 mm Dicke gemäß ISO 527) und 80x10x4 mm (gem. ISO 178) verspritzt.

Bis auf die MVR-Messungen wurden alle in Tabelle 1 aufgeführten Untersuchungen werden an o.g. Schulterstäben durchgeführt.

In Tabelle 2 wurden die aufgeführten Untersuchungen zur Heißluftalterung (Reißdehnung) an o.g. Schulterstäben durchgeführt, alle Untersuchungen zur Hydrolysebeständigkeit (Randfaserdehnung bei Biegefestigkeit, COOH) an o.g. 80x10x4 mm-Stäben.

Die Bestimmung der COOH-Endgruppen erfolgt durch Auflösen von Probenmaterial in Kresol / Chloroform und anschließender photometrischer Titration.

Reißdehnung: Bestimmt nach DIN/EN/ISO 527-2/1A an o.g. Schulterstäben im Zugversuch.

Randfaserdehnung bei Biegefestigkeit: Bestimmt nach DIN/ISO 178

MVR: Fließfähigkeit nach DIN/ISO 1133 bei 260°C und 2,16 kg.

GPC: Eluent: Tetrahydrofuran, Brechungsindex (RI)-Detektor, Durchführung nach DIN 55672-1, kalibriert gegen Polystyrol-Standards

Die Hydrolyseversuche erfolgen durch Lagerung der Prüfkörper in einem Varioklav Dampfsterilisator (Typ 300/400/500 EP-Z) bei 100°C in einer gesättigten Wasserdampfatmosphäre.

Die Wärmealterung erfolgte bei 110°C der Prüfkörper in einem Umlufttrockenschrank.

Kontaktkorrosion: Zur Beurteilung der Kontaktkorrosion wird ein Bronzestreifen (Legierung CuSn6 der Fa. Möller, Bonn) der Länge von 4 cm in einem Erlmeyerkolben zur Hälfte im Granulat und zur Hälfte in der Luft in einem Umlufttrockenschrank bei 140°C gelagert. Die Verfärbung/Korrosion des Bronzestreifens wird beurteilt: ++ = sehr gut = keine Verfärbung/Korrosion; + = gut = kaum Verfärbung/Korrosion; o = mäßig = mäßige Verfärbung/Korrosion; - = schlecht = starke Verfärbung/Korrosion.

Wie aus Tabelle 1 ersichtlich zeigen die erfindungsgemäßen Formmassen (Bsp.1) nach Heißluflalterung von 336 Stunden und von 672 Stunden sowie nach Wasserdampflagerung nach 72 Stunden, nach 168 Stunden und nach 240 Stunden höhere Reißdehnungen im Zugversuch und/oder niedrigere COOH-Endgruppengehalte als die Vergleichsbeispiele 1 und 2. Niedrigere COOH-Endgruppengehalte und höhere Reißdehnungswerte nach Wasserdampflagerung weisen auf geringere Polymerschädigung durch Polymerabbau hin und zeigen die verbesserte Thermo- und Hydrolysebeständigkeit und damit verbesserte Stabilisierungseigenschaften von Komponente A hin. Außerdem zeigt Bsp.1 mit polymeren Phosphorgsäureester die besten Kontaktkorrosionseigenschaften im Vergleich zu den niedermolekularen Stabilisatoren in Vgl.1 und Vgl. 2.

Wie aus Tabelle 2 ersichtlich zeigen glasfaserverstärkte erfindungsgemäße Formmassen (Bsp.2) nach Heißluftalterung von 336 Stunden und von 672 Stunden höhere Reißdehnungen im Zugversuch. Die im Hinblick auf Hydrolysebeständigkeit glasfaserverstärkter Thermoplaste besonders aussagekräftige Randfaserdehnung bei Biegefestigkeit im Biegeversuch ist nach Wasserdampflagerung nach 72 Stunden, nach 168 Stunden und nach 240 Stunden für erfindungsgemäße Formmassen (Bsp. 2) stets höher als für das Vergleichsbeispiel mit niedermolekularem Stabilisator (Vgl. 3). Die COOH-Endgruppengehalte sind für Bsp.2 nach Wasserdampflagerung nach 72 Stunden, nach 168 Stunden und nach 240 niedriger als für Vgl. 3 . Diese Ergebnisse belegen eine geringere Polymerschädigung durch Polymerabbau und zeigen die verbesserte Thermo- und Hydrolysebeständigkeit und damit verbesserte Stabilisierungseigenschaften von Komponente A hin. Außerdem zeigt Bsp.2 mit polymeren Phosphorsäureester die besten Kontaktkorrosionseigenschaften im Vergleich zu dem niedermolekularen Stabilisator in Vgl.3.

**Tabelle 1**

| | | Vgl.1 | Vgl.2 | Bsp.1 |
|---|---|---|---|---|
| Komponente A | [%] | -- | -- | 0,10 |
| Komponente B | [%] | 99,5 | 99,5 | 99,5 |
| Stabilisator S1 | [%] | 0,1 | -- | -- |
| Stabilisator S2 | [%] | -- | 0,10 | -- |
| Additive | [%] | 0,40 | 0,40 | 0,40 |
| MVR bei 260°C/ 2,16 kg | [cm³/10min] | 60,5 | 63,8 | 62,9 |
| Reißdehnung spritzfrisch vor Hydrolyse oder Heißluftalterung | [%] | 18,7 | 22,9 | 21,2 |
| Reißdehnung nach 336 Stunden Heißluftalterung bei 110°C | [%] | 12,8 | 19,1 | 22,2 |
| Reißdehnung nach 672 Stunden Heißluftalterung bei 110°C | [%] | 8,9 | 10,0 | 10,2 |
| COOH-Endgruppen spritzfrisch vor Hydrolyse oder Heißluftalterung | [nnnol/kg] | 21 | 24 | 20 |
| COOH-Endgruppen nach 336 Stunden Heißluftalterung bei 110°C | [mmol/kg] | 23 | 24 | 22 |
| Reißdehnung nach 72h Hydrolyse | [%] | 11,2 | 11,2 | 13,8 |
| Reißdehnung nach 168h Hydrolyse | [%] | 4,3 | 3,2 | 4,8 |
| Reißdehnung nach 240h Hydrolyse | [%] | 0,6 | 0,6 | 1,3 |
| COOH-Endgruppen nach 72h Hydrolyse | [mmol/kg] | 31 | 33 | 31 |
| COOH-Endgruppen nach 168h Hydrolyse | [mmol/kg] | 47 | 51 | 47 |
| COOH-Endgruppen nach 240h Hydrolyse | [mmol/kg] | 64 | 68 | 62 |
| Korrosion von Bronzestreifen nach 240 h | | + | O | ++ |

**Tabelle 2**

| | | Vgl.3 | Bsp.2 |
|---|---|---|---|
| Komponente A | [%] | -- | 0,10 |
| Komponente B | [%] | 78,6 | 78,6 |
| Componente C | [%] | 20,0 | 20,0 |
| Stabilisator S 1 | [%] | 0,10 | -- |
| Stabilisator S2 | [%] | -- | -- |
| Additive | [%] | 0,40 | 0,40 |
| MVR bei 260°C/ 2,16 kg | [cm³/10min] | 23,5 | 23,6 |
| Reißdehnung spritzfrisch vor Heißluftalterung | [%] | 3,4 | 3,5 |
| Reißdehnung nach 336 Stunden Heißluftalterung bei 110°C | [%] | 3,3 | 3,5 |
| Reißdehnung nach 672 Stunden Heißluftalterung bei 110°C | [%] | 3,2 | 3,5 |
| Randfaserdehnung bei Biegefestigkeit spritzfrisch vor Hydrolyse | [%] | 4,2 | 4,5 |
| Randfaserdehnung bei Biegefestigkeit nach 72h Hydrolyse | [%] | 3,1 | 3,2 |
| Randfaserdehnung bei Biegefestigkeit nach 168h Hydrolyse | [%] | 2,5 | 2,5 |
| Randfaserdehnung bei Biegefestigkeit nach 240h Hydrolyse | [%] | 1,9 | 2,0 |
| COOH-Endgruppen spritzfrisch vor Hydrolyse oder Heißluflalterung | [mmol/kg] | 18 | 16 |
| COOH-Endgruppen nach 72h Hydrolyse | [mmol/kg] | 27 | 22 |
| COOH-Endgruppen nach 168h Hydrolyse | [mmol/kg] | 38 | 36 |
| COOH-Endgruppen nach 240h Hydrolyse | [mmol/kg] | 51 | 48 |
| Korrosion von Bronzestreifen nach 240 h | | + | ++ |

## Patentansprüche

1. Zusammensetzungen enthaltend
A) 0,01 bis 5 Gew.-% (bezogen auf die Gesamtzusammensetzung) polymere Phosphorigsäureester, welche pro Molekül mindestens eine Oxetangruppe enthalten und von denen 50 % oder mehr aller Moleküle mindestens vier Monomere aus der Gruppe eines zwei- oder mehrwertigen Phenols und/oder Ester der phosphorigen Säure enthalten,
B) 20 bis 99,99 Gew.-% Thermoplaste und
C) 0 bis 70 Gew.-% mindestens eines Füll- und Verstärkungsstoffen,
D) 0 bis 30 Gew.-% mindestens eines Flammschutzadditiven,
E) 0 bis 80 Gew.-% mindestens eines weiteren von Komponente B verschiedenen Thermoplasten,
F) 0 bis 80 Gew.-% mindestens eines Elastomermodifikators
G) 0 bis 10 Gew.-% weiterer üblicher Additive, **dadurch gekennzeichnet, dass** als Thermoplaste B) Polycarbonate und/oder Polyalkylenterephthalate eingesetzt werden.

2. Zusammensetzungen gemäß Anspruch 1, **dadurch gekennzeichnet, dass** diese
A) 0,03 Gew.-% bis 0,1 Gew.-% (bezogen auf die Gesamtzusammensetzung) polymere Phosphorigsäureester, welche pro Molekül mindestens eine Oxetangruppe enthalten und von denen 50 % oder mehr aller Moleküle mindestens vier Monomere aus der Gruppe eines zwei- oder mehrwertigen Phenols und/oder Ester der phosphorigen Säure enthalten,
B) 30 Gew.-% bis 41,87 Gew.-% Thermoplast,
C) 9 bis 31 Gew.-% mindestens eines Füll- und Verstärkungsstoffen,
D) 9 bis 19 Gew.% mindestens eines Flammschutzadditiven,
E) 31 bis 51 Gew.-% mindestens eines weiteren von Komponente B verschiedenen Thermoplasten,
F) 9 bis 15 Gew.-% mindestens eines Elastomermodifikators und
G) 0,1 bis 0,9 Gew.-% weitere übliche Additive enthalten.

3. Zusammensetzungen gemäß einem oder mehreren der vorangegangenen Ansprüche, wobei der Thermoplast Polybutylenterephthalat ist.

4. Zusammensetzungen gemäß einem oder mehreren der vorangegangenen Ansprüche, wobei E) Polycarbonat ist.

5. Zusammensetzungen gemäß einem oder mehreren der vorangegangenen Ansprüche, wobei für A) Phosphorigsäureester der Formel (Ia), (Ib) (Ic), und/oder (Id), 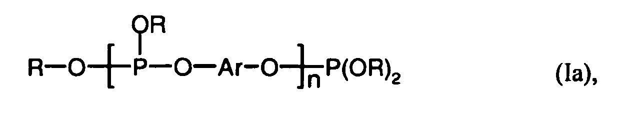 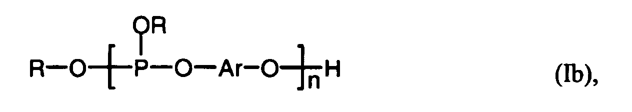 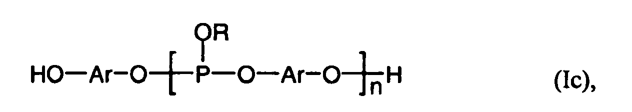 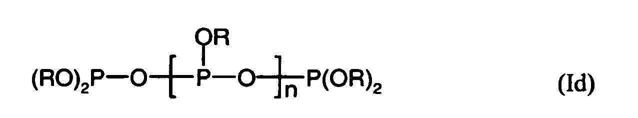 in welcher
n 2 oder eine beliebige ganze Zahl >2, vorzugsweise 2 bis 10,
R Alkyl, Aralkyl, Cycloalkyl, Aryl bzw. Phenyl oder Hetaryl bedeutet, wobei mindestens einer der Reste R eine Oxetangruppe trägt, und
Ar für Aryl steht, welches gegebenenfalls durch Alkyl und/oder Hydroxy substituiert sein kann, und wobei Ar gleich oder verschieden sein kann,
eingesetzt werden.

6. Zusammensetzungen gemäß einem oder mehreren der vorangegangenen Ansprüche, wobei die Oxetangruppe der Komponente A einen heterocyclischen Rest 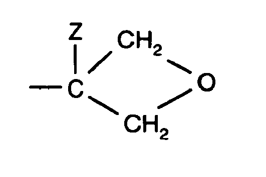 darstellt, mit Z gleich -CH₂-O-C₆H₁₃ oder CH₂-O-C₂H₅, oder bevorzugt H, n-C₅H₁₁, -CH₂-C₅H₁₁, oder sehr bevorzugt CH₃ oder äußerst bevorzugt C₂H₅.

7. Zusammensetzungen gemäß einem oder mehreren der vorangegangenen Ansprüche, wobei als Komponente A die Verbindungen 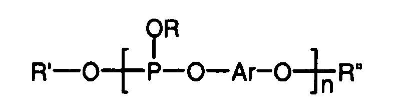 mit R' = R, HO-AR-, (RO)₂P-
und R" = (RO)₂P-, H,
enthalten sind.

8. Zusammensetzungen gemäß einem oder mehreren der vorangegangenen Ansprüche, wobei als Komponente A Verbindungen eingesetzt werden, die folgendes Strukturelement enthalten:

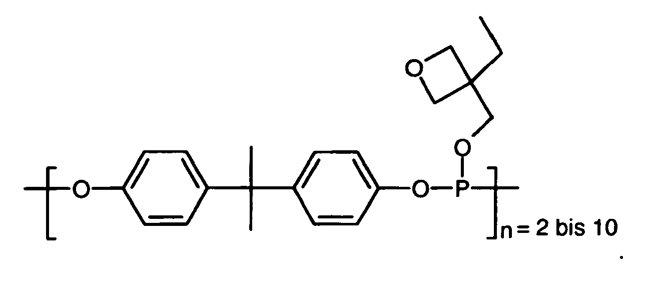

9. Zusammensetzung gemäß Anspruch 1, wobei C = 0 Gew.-% beträgt.

10. Zusammensetzung gemäß Anspruch 1, wobei als Komponente C Glasfasern eingesetzt werden.

11. Verwendung der Zusammensetzungen gemäß einem oder mehreren der vorangegangenen Ansprüche zur Herstellung von Formkörpern.

12. Formkörper, hergestellt gemäß einem oder mehreren der vorangegangenen Ansprüche.

## Claims

1. Compositions containing
A) 0.01 to 5 wt. % (in relation to the total composition) polymeric phosphorous esters which contain, per molecule, at least one oxetane group and of which 50% or more of all molecules contain at least four monomers from the group of a di- or polyhydric phenol and/or ester, of phosphorous acid,
B) 20 to 99.99 wt. % thermoplastics, and
C) 0 to 70 wt. % of at least one filling and reinforcing material,
D) 0 to 30 wt. % of at least one flame-retarding additive,
E) 0 to 80 wt. % of at least one further thermoplastic, different from component B,
F) 0 to 80 wt. % of at least one elastomer modifier,
G) 0 to 10 wt. % of other conventional additives, **characterized in that** the thermoplastics B) are polycarbonates and/or polyalkylene terephthalates.

2. Compositions according to Claim 1, **characterized in that** they contain
A) 0.03 wt. % to 0.1 wt. % (in relation to the total composition) polymeric phosphorous esters which contain, per molecule, at least one oxetane group and 50% or more of all molecules of which contain at least four monomers from the group of a di- or polyhydric phenol and/or ester, of phosphorous acid,
B) 30 wt. % to 41.87 wt. % thermoplastic,
C) 9 to 31 wt. % of at least one filling and reinforcing material,
D) 9 to 19 wt. % of at least one flame-retarding additive,
E) 31 to 51 wt. % of at least one further thermoplastic different from component B,
F) 9 to 15 wt. % of at least one elastomer modifier, and
G) 0.1 to 0.9 wt. % of other conventional additives.

3. Compositions according to one or more of the preceding claims, wherein the thermoplastic is polybutylene terephthalate.

4. Compositions according to one or more of the preceding claims, wherein E) is polycarbonate.

5. Compositions according to one or more of the preceding claims, wherein phosphite esters of the formula (Ia), (Ib), (Ic) and/or (Id), 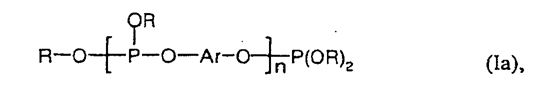 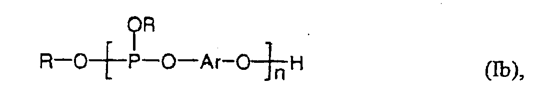 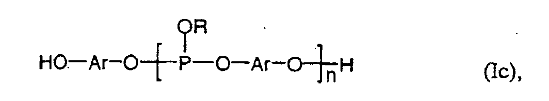 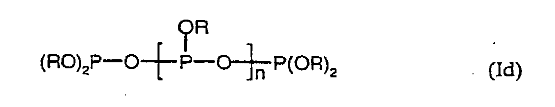 in which n means 2 or any integer >2, preferably 2 to 10,
R means alkyl, aralkyl, cycloalkyl, aryl or phenyl or hetaryl, at least one of the R radicals carrying an oxetane group, and
Ar represents aryl, which may optionally be substituted by alkyl and/or hydroxy, Ar being the same or different, are used as A).

6. Compositions according to one or more of the preceding claims, the oxetane group of component A being a heterocyclic radical 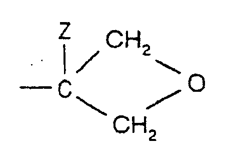 where Z is equal to -CH₂-O-C₆H₁₃ or CH₂-O-C₂H₅ or preferably H, n-C₅H₁₁, -CH₂-C₅H₁₁, or very preferably CH₃, or extremely preferably C₂H₅.

7. Compositions according to one or more of the preceding claims, containing, as component A, the compounds 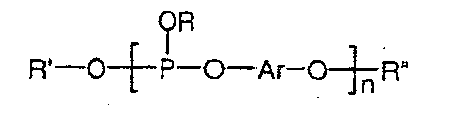 where R'=R, HO-AR-, (RO)₂P-
and R"=(RO)₂P-, H.

8. Compositions according to one or more of the preceding claims, wherein compounds that contain the following structural element: 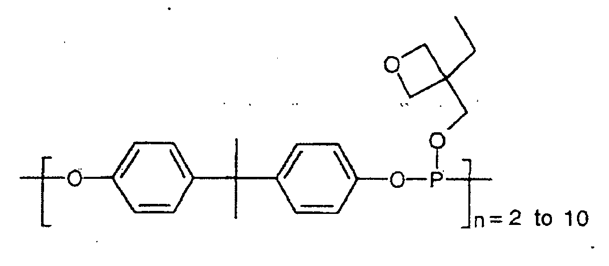 are used as component A.

9. Composition according to Claim 1, wherein C = 0 wt. %.

10. Composition according to Claim 1, wherein glass fibres are used as component C.

11. Use of the compositions according to one or more of the preceding claims for the production of moulded bodies.

12. Moulded bodies produced according to one or more of the preceding claims.

## Revendications

1. Compositions comprenant :
A) de 0,01 à 5 % en poids (par rapport à la composition totale) d'esters d'acides phosphoreux polymères qui renferment, par molécule, au moins un groupe oxétane, et dont 50 % ou plus de toutes les molécules renferment au moins quatre monomères parmi le groupe d'un phénol dihydrique ou polyhydrique et/ou d'un ester de l'acide phosphoreux,
B) de 20 à 99,99 % en poids de thermoplastiques,
C) de 0 à 70 % en poids d'au moins une substance de remplissage et de renforcement,
D) de 0 à 30 % en poids d'au moins un additif ignifugeant,
E) de 0 à 80 % en poids d'au moins un thermoplastique supplémentaire différent du composant B,
F) de 0 à 80 % en poids d'au moins un agent modificateur d'élastomère,
G) de 0 à 10 % en poids d'additifs habituels supplémentaires, **caractérisées en ce que** l'on utilise des polycarbonates et/ou des polyalkylènetéréphtalates en tant que thermoplastiques B).

2. Compositions selon la revendication 1, **caractérisées en ce que** celles-ci comprennent :
A) de 0,03 à 0,1 % en poids (par rapport à la composition totale) d'esters d'acides phosphoreux polymères qui renferment, par molécule, au moins un groupe oxétane, et dont 50 % ou plus de toutes les molécules renferment au moins quatre monomères parmi le groupe d'un phénol dihydrique ou polyhydrique et/ou d'un ester de l'acide phosphoreux,
B) de 30 à 41,87 % en poids de thermoplastiques,
C) de 9 à 31 % en poids d'au moins une substance de remplissage et de renforcement,
D) de 9 à 19 % en poids d'au moins un additif ignifugeant,
E) de 31 à 51 % en poids d'au moins un thermoplastique supplémentaire différent du composant B,
F) de 9 à 15 % en poids d'au moins un agent modificateur d'élastomère, et
G) de 0,1 à 0,9 % en poids d'additifs habituels supplémentaires.

3. Compositions selon l'une ou plusieurs des revendications précédentes, dans lesquelles le thermoplastique est un polybutylènetéréphtalate.

4. Compositions selon l'une ou plusieurs des revendications précédentes, dans lesquelles E) est un polycarbonate.

5. Compositions selon l'une ou plusieurs des revendications précédentes, dans lesquelles pour A) on utilise des esters d'acide phosphoreux de formules (Ia), (Ib), (Ic) et/ou (Id), 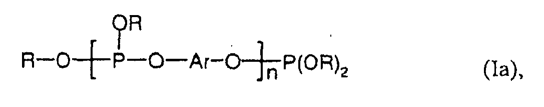 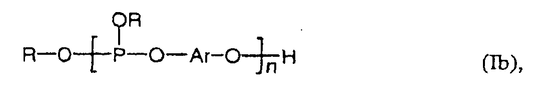 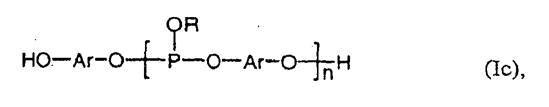 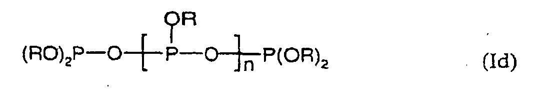 dans lesquelles :
n vaut 2 ou représente un entier quelconque supérieur à 2, de préférence vaut de 2 à 10,
R représente un groupe alkyle, un groupe aralkyle, un groupe cycloalkyle, un groupe aryle ou un groupe phényle ou un groupe hétaryle, au moins l'un des radicaux R portant un groupe oxétane, et
Ar représente un groupe aryle, qui peut être éventuellement substitué par un groupe alkyle et/ou un groupe hydroxy, et où Ar peut être identique ou différent.

6. Compositions selon l'une ou plusieurs des revendications précédentes, dans lesquelles le groupe oxétane du composant A représente un radical hétérocyclique 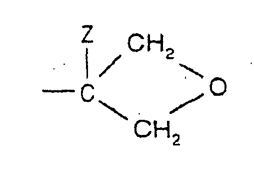 dans lequel Z représente un groupe -CH₂-O-C₆H₁₃ ou un groupe CH₂-O-C₂H₅ ou de préférence un groupe H, un groupe n-C₅H₁₁, un groupe -CH₂-C₅H₁₁, ou très préférablement un groupe CH₃, ou extrêmement préférablement un groupe C₂H₅.

7. Compositions selon l'une ou plusieurs des revendications précédentes, comprenant, en tant que composant A, les composés 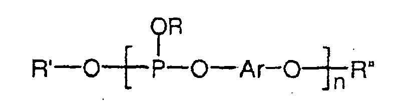 dans lesquels :
R' représente un groupe R, un groupe HO-AR-, un groupe (RO)₂P-, et
R" représente un groupe (RO)₂P-, un groupe H.

8. Compositions selon l'une ou plusieurs des revendications précédentes, dans lesquelles on utilise en tant que composant A, des composés qui renferment l'élément structural :

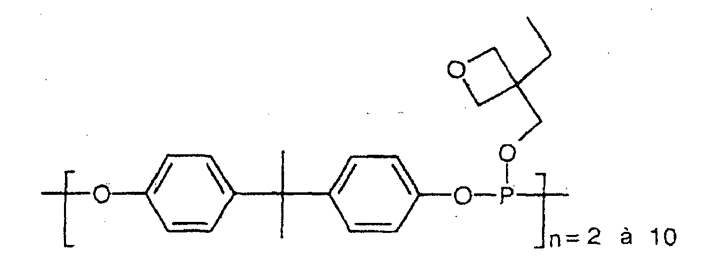

9. Composition selon la revendication 1, dans laquelle C = 0 % en poids.

10. Composition selon la revendication 1, dans laquelle on utilise des fibres de verre en tant que composant C.

11. Utilisation des compositions selon l'une ou plusieurs des revendications précédentes pour la production de corps moulés.

12. Corps moulés produits selon l'une ou plusieurs des revendications précédentes.
